# EUROPEAN PATENT SPECIFICATION

(11) **EP 1 706 362 B1**
(45) Date of publication and mention of the grant of the patent: **10.03.2010**
(21) Application number: 05701902.8
(22) Date of filing: 20.01.2005
(51) Int. Cl.: C04B 18/02

(54) **PROCESS FOR PARTICULATE MATERIAL**
VERFAHREN FÜR TEILCHENFÖRMIGES MATERIAL
PROCEDE DESTINE A UN MATERIAU PARTICULAIRE

(30) Priority: 24.01.2004 GB 0401561
(43) Date of publication of application: 04.10.2006
(73) Proprietor: Veolia Water Industrial Outsourcing Limited, Rickmansworth Hertfordshire WD3 1FN (GB)
(72) Inventor: HARRISON, David, Veolia Water Ind. Outsourcing Ltd, Bushey, Herts WD23 2LD (GB); ROBERTSON, Robert, Staffs BT9 8TJ (GB)
(74) Representative: Earnshaw, Geoffrey Mark
(86) International application number: PCT/GB2005/000134
(87) International publication number: WO 2005/070847

(56) References cited:
- WO-A-95/18885
- GB-A- 2 362 643
- US-A- 5 018 459
- US-A- 5 392 721
- US-A- 5 772 937
- US-A1- 2003 159 624
- PATENT ABSTRACTS OF JAPAN vol. 2000, no. 15, 6 April 2001 (2001-04-06) -& JP 2000 344564 A (NIPPON KAYAKU CO LTD), 12 December 2000 (2000-12-12)

## Description

The present invention relates to a process for preparing a particulate material based on recycled paper waste sludge containing cellulose fibres, china clay and calcium carbonate, and products prepared therefrom.

There is an increasing industry in recycling waste paper. Waste paper is increasingly collected throughout the UK with intent to recycle it. However, the term "waste paper" includes a myriad of different types of paper-fibre materials, all of which are provided by the public in the belief that they are all 'recyclable' in the same way.

A number of the "waste papers" also contain materials that have been added during the original paper production and conversion processes, and these must be removed to provide a clean fibre material suitable for re-use in a paper machine. Two main materials that need to be removed from many types of waste papers are china clay, also known as kaolin, and calcium carbonate. These are added to certain paper products to make the paper opaque and to improve its printing quality. Other materials that commonly need to be removed from waste papers are staples, clips, glues, plastic coatings, etc.

Large separated materials from waste papers are generally disposed of directly as "trash". These include plastics, plastic coating materials and metal clips, etc. Fine separated materials are carried in an aqueous suspension to an effluent treatment process where they are removed by gravity sedimentation, and then further dewatered to 40-60% solids for disposal. This creates a biological sludge, (which can also be mixed with a primary sludge before the dewatering stage).

The "paper waste sludge solids" are currently simply deposited in landfill sites or spread on land. However, increasing environmental legislation requires this depositing to be reduced.

Meanwhile, paper making processes generally also create a paper-fibre based sludge waste product which is also currently deposited in landfill sites or spread on land.

A typical quantity of waste sludge from a paper recycling and paper making facility can be 250 tonnes per day, representing a significant amount of waste sludge material.

It is an object of the present invention to provide a process for treating such waste material to form an industrial useful product.

Thus, according to one aspect of the present invention, there is provided a process for preparing a particulate solid material comprising the steps of:
(a) obtaining a paper-fibre waste solid material in water;
(b) determining a ratio of the china clay:chalk in the paper-fibre waste solid material in water using either:
   (i) an 'acid extraction' method wherein the minimum pre-determined ratio is 0.2; or
   (ii) an 'ash/acid extraction' method wherein the minimum pre-determined ratio is 0.13;
(c) where the china clay:chalk ratio is less than the minimum pre-determined ratio, adding a conditioning agent to the paper-fibre waste solid material to raise the china clay:chalk ratio above the minimum pre-determined ratio;
(d) dewatering the paper-fibre waste solid material to produce a dewatered material with a solid content in the range of 22-55%;
(e) drying the dewatered material in a rotary apparatus with agitation to produce granular material in an inert atmosphere; and
(f) calcining the granular material at a temperature of approximately 1300oC or higher to provide a particulate, 100% solids, material.

The paper-fibre waste solid material can be provided by the non-hazardous waste material arising from the recycling of waste paper and tissue. Such material is generally in the form of sludge, having a moisture content of over 45%, and commonly over 55%, 60%, or higher. Such sludge contains china clay, calcium carbonate as well as the general cellulose fibre content. Such material may also include surplus biomass from biological effluent treatment processes and water treatment processes which produce sludge. Minor components may include non-fibrous 'contraries' materials arising from waste paper, including such items as polythene, plastics, metal (in the form of wire, staples, paper clips).

The term china clay includes any form of hydrated aluminium silicate, including kandites, kaolins and the like.

The term chalk includes any form of calcium carbonate, which includes the forms of limestone.

The sludge is preferably dewatered so as to produce a sludge having an increased solids content.

Analysis of the china clay:chalk ratio is carried out prior to the dewatering of the waste material.

One method of analysis is termed 'acid extraction'. A sample of sludge cake of known dry solids is treated with 10% acetic acid solution to dissolve calcium carbonate. The remaining solids are filtered out, washed, dried at 105°C and weighed. The loss in weight determines the calcium carbonate content of the dry solids content of the sludge cake. The remaining solids are further heated to a high temperature such as, but not limited to, 800°C, to form an ash free from carbon which again is weighed. The further loss in weight determines the cellulose content of the sludge cake. The remaining weight of ash determines the clay content. From these calculated values the clay:chalk (calcium carbonate) ratio is calculated.

By the acid extraction method, the pre-determined minimum is approximately 0.2.

Another method of analysis is termed "ash/acid extraction". For this, a weighed sample of dried sludge cake is treated to 800°C to form an ash free from carbon. The cooled sample is weighed and the loss in weight determines the cellulose content plus the carbon dioxide arising from the destruction of the calcium carbonate. The cooled sample is then treated with 10% acetic acid, filtered, washed, dried and weighed. The further loss in weight determines the calcium oxide content and the remaining weight determines the clay content. From these measured values the cellulose, calcium carbonate and clay contents can be calculated.

By the ash/acid extraction method, the pre-determined minimum is approximately 0.13.

Dewatering is a process well known in the art, as are the process parameters for the pressing action. Traditionally, a polyelectrolyte is added to a waste material, which material can often have only a 7% solids content, in order to agglomerate the very fine waste material, commonly termed "fines", in the process. The dewatering process increases the solids content several fold, such as to a typical solids content of 45%.

Where the china clay:chalk ratio is found to be less than the pre-determined minimum in the waste material, a conditioning material is added to the waste material. The conditioning material is preferably partly, substantially or wholly china clay, or at least a china clay suspension, or another silicate material having the same properties. A dispersing agent could also added to the conditioning material in order to maintain the china clay or similar material in a suspended form, in a liquid host such as water.

It has been found that by varying the conditioning material content in the waste material, the dewatering process can result in a material having less solids content than, for example 45%, such content being even 22% or lower.

In an embodiment of the present invention, the conditioning material is added to the waste material even when the china clay:chalk ratio is greater than the pre-determined minimum, in order to effect the properties of the material as treated thereafter.

The dewatering process provides a sludge material having a solids content generally in the range 22-55%.

In another embodiment of the present invention, the ratio of silica and aluminium to natural fillers in the paper sludge is based on the addition of the conditioning material which uses silica and/or aluminum to promote fluxing of the paper sludge.

Steps (d) and/or (e) of the present invention could be carried out by operating on the paper-fibre waste material in various ways, such as compression, extrusion or the like, and/or a combination of such processes. Extrusion through a die with apertures produces lines of a material which either inherently or by further processing produces a granulated material. A granulating press could be used for one of these steps.

The step (e) of the present invention could also be provided by direct heat contact, such as conduction. A heat transfer material could be used such as steam, etc. in this regard. The action of the heat treatment is to partly or substantially 'dry' the paper-fibre based material.

Such a heat treatment process could be carried out with agitation, such as provided by a rotary apparatus such as a rotary dryer. An inclined rotary processor can reduce water content while inducing a stumbling action against heated surfaces at controlled temperatures. Preferably, any heat treating apparatus allows for a wholly or substantially continuous feed of starting material. The process may involve recycling of material to adjust the range of particle sizes of granular material produced.

The step (e) is preferably carried out at a raised temperature, preferably between 60-80°C, although not limited thereto.

The step (e) could also be carried out under an inert atmosphere. Such an inert atmosphere could be provided by displacing air with steam, either by direct injection or by evaporated water. Heat treating the material in an inert atmosphere reduces the moisture content and forms the material into rounded granules approximately 3mm-30mm in size.

In another embodiment of the present invention, the granular material formed by step (e) could be further granulated, that is further processed in a granulator or the like to better form a more regular, generally spherical, shaped solids material.

The material formed by step (e) preferably has a solids content in the range of approximately 45-90% solids. It has been found that the moisture content of the so-formed granular material affects the size of the particulate material formed in the subsequent calcining step.

The calcining of the granular material is adapted to reduce the moisture in the material to zero. The particulate material being formed also becomes porous, either partly or substantially, by the burning of the cellulose content of the waste material.

The calcining also fuses the granular material, so as to provide solid pellets.

Preferably, the granular material is calcined with agitation, such as provided by a rotary apparatus, an example is a high temperature rotary furnace, such as a tube. The rotary action serves to provide a more even evaporation of moisture and burning of cellulose.

Preferably, the calcining temperature is greater than 1300°C, possibly approximately 1320°C or higher.

In one embodiment of the present invention, the calcined product is reduced, for example granulated or refined or otherwise ground. With certain size reduction, such as milling or the like, a particular particle maximum size or range of sizes can be achieved. For example, through milling the calcined particulate material to have a maximum particle size of 100µm, a fine particulate material is formed which is useable as a cementious material, for example as a partial, substantial or complete replacement or substitute for current cement materials in building blocks such as 'breeze blocks' and the like.

According to a second aspect of the present invention, there is provided a particulate solid material obtainable by a process as herein described.

The particulate solid material has a bulk density of less than 1,000kg/m³, and generally in the range 560 kg/m³ to 800 kg/m³. The particulate solid material is in the form of an aggregate. The aggregate has a mean particle size of between 3-15mm. The mean particle size can be favoured based on the moisture content of the material made by the treatment step. The use of a drier material provides a smaller mean particle size, whereas the use of wetter material provides a larger mean particle size.

The particulate solid material may be usable in a number of industrial applications, including as a light weight aggregate for making cementitious, concrete or other building blocks, or as a replacement or filler material in other building applications. The material is also 'eco-friendly'. Examples of the present invention will now be described by way of example only.

### Example 1

The starting material was provided from waste from paper recycling in the form of raw separated solids with water or sludge from biological or chemical treatment of the separated solids. The starting material included china clay, calcium carbonate, cellulose fibres and a water content of approximately 93%.

The material was analysed by the acid extraction procedure to determine the ratio of clay:chalk and to further determine the amount of conditioning material to be added to bring the clay:chalk ratio up to 0.2.

The conditioning material may include clay or chalk and is prepared as a suspension in water at a suitable concentration to facilitate pumping.

The material was fed to dewatering equipment with conditioning material injected into the feed pipeline. Dewatered material was collected from the dewatering equipment with water content varying from 55% to 80%.

The dewatered material was fed at 10-15 kg/h into a drier where heat transfer by contact with hot surfaces evaporated water, formed the material into rounded granules and provided an inert atmosphere. The rounded granules were from 3-30mm in size, with occasional granules up to 50mm in size, with a water content of approximately 50%.

The dried material was fed at approximately 15 kg/h into a calciner comprising a rotating tube lined with refractory material and equipped with a propane burner. The calciner was inclined so that material passed counter current to the gas flow, passed through a hot zone at 1300°C-1350°C before being discharged into a receiving tray. The residence time in the calciner was approximately 15-20 minutes and the final processed material was hard to the touch, light brown with a speckled surface in appearance and produced a clear sound when dropped onto a hard surface.

### Example 2

The starting material was provided from waste from paper recycling in the form of raw separated solids with water or sludge from biological or chemical treatment of the separated solids. The starting material included china clay, calcium carbonate, cellulose fibres and a water content of approximately 93%.

The material was analysed by the acid extraction procedure to determine the ratio of clay:chalk and to further determine the amount of conditioning material required to bring the clay:chalk ratio to >0.2.

The conditioning material may include clay or chalk and in this example was presented as a filter cake which was prepared as a suspension in water at a suitable concentration to facilitate pumping.

The material was fed to dewatering equipment with the conditioning material injected into the feed pipeline. Dewatered material was collected with water content varying from between 40% and 45%.

The dewatered material was fed to a granulating press fitted with an extrusion plate thus producing extruded particles of approximately 20mm diameter having a cylindrical form.

The extruded particles were transferred to a granulating table comprising an inclined surface with a rim to retain material, and inclined at an angle so that rotation of the table produced rounded particles. Small quantities of water were sprayed onto the particles to assist with rounding of them. Undersized and fine particles were separated by screening and were returned to the granulating press to be reformed.

The rounded particles were fed at a rate up to approximately 35 kg/h into a calciner comprising a rotating tube lined with refractory material and equipped with a gas burner. The calciner was inclined so that material passed counter current to the gas flow and passed through a hot zone before being discharged into a receiving tray. The final processed material was hard to the touch and light brown with a speckled surface in appearance. The bulk density of the product varied from 560 kg/m³ to 920 kg/m³ by adjusting the feed rate and speed of rotation of the calciner.

### Example 3

1,130 kg of the final processed material was further treated to reduce its particle size by milling whereby it was passed it through a rotating cylinder containing heavy balls of steel such that the tumbling action of the balls crushed the final processed material to a particle size of less than 100 µm. The milled material was tested by incorporating it in the formulation of concrete products, such as concrete blocks for building. In tests a substantial part of the cement content of the formulation was replaced by the milled material which produced satisfactory concrete blocks having sufficiently similar properties to existing 'breeze blocks' so as to be direct substitute therefor.

The present invention provides an eco-friendly method of using a significant waste product, that is currently simply deposited in landfill sites or spread on land. The process produces a material which is usable in a number of industrial applications, thereby not only increasing the recyclability of waste papers, but provided a beneficial product.

## Claims

1. A process for preparing a particulate solid material comprising the steps of:
(a) obtaining a paper-fibre waste solid material in water;
(b) determining a ratio of the china clay:chalk in the paper-fibre waste solid material in water using either:
(i) an 'acid extraction' method wherein the minimum pre-determined ratio is 0.2; or
(ii) an 'ash/acid extraction' method wherein the minimum pre-determined ratio is 0.13; both methods being defined in the description;
(c) where the china clay:chalk ratio is less than the minimum pre-determined ratio, adding a conditioning agent to the paper-fibre waste solid material to raise the china clay:chalk ratio above the minimum pre-determined ratio;
(d) dewatering the paper-fibre waste solid material to produce a dewatered material with a solid content in the range of 22-55%;
(e) drying the dewatered material in a rotary apparatus with agitation to produce granular material in an inert atmosphere; and
(f) calcining the granular material at a temperature of approximately 1300°C. or higher to provide a particulate, 100% solids, material.

2. A process as claimed in claim 1 wherein the paper-fibre waste solid material is non-hazardous waste material arising from the recycling of waste paper and tissue.

3. A process as claimed in claim 2 wherein the paper-fibre waste solid material is in the form of sludge.

4. A process as claimed in any one of the preceding claims wherein the paper-fibre waste solid material has a moisture content of over 45%.

5. A process as claimed in claim 4 wherein the paper-fibre waste solid material has a moisture content of over 55%, optionally 60%.

6. A process as claimed in any one of the preceding claims wherein minor components in the paper-fibre waste solid material including non-fibrous contraries materials are removed prior to step (d).

7. A process as claimed in any one of the preceding claims wherein the paper-fibre waste solid material is waste paper from a paper making process.

8. A process as claimed in any one of the preceding claims wherein china clay includes any form of hydrated aluminium silicate, including kandites and kaolins.

9. A process as claimed in any one of the preceding claims wherein the chalk includes any form of calcium carbonate, which includes the forms of limestone.

10. A process as claimed in any one of the preceding claims wherein the conditioning material is added to the paper-fibre waste solid material in step (b) even when the china clay:chalk ratio is greater than the pre-determined minimum.

11. A process as claimed in any one of the preceding claims wherein the conditioning material is partly, substantially or wholly china clay, or at a china clay suspension, or another silicate material.

12. A process as claimed in any one of the preceding claims wherein a dispersing agent is added with the conditioning material.

13. A process as claimed in any one of the preceding claims wherein the material has a solids content of less than 45%, optionally 22% or lower.

14. A process as claimed in any one of the preceding claims wherein the ratio of silica and aluminium to natural fillers in the paper-fibre waste solid material is also determined.

15. A process as claimed in any one of the preceding claims wherein the drying step (e) includes compression and/or extrusion of the material.

16. A process as claimed in claim 15 wherein step (e) is carried out by a granulating press.

17. A process as claimed in any one of the preceding claims wherein the drying step (e) is provided by direct heat contact.

18. A process as claimed in claim 17 wherein a heat transfer material is used.

19. A process as claimed in any one of the preceding claims wherein the rotary apparatus is inclined.

20. A process as claimed in claim 19 wherein the rotary apparatus allows for a wholly or substantially continuous feed of material.

21. A process as claimed in any one of the preceding claims wherein the drying step (e) is carried out at a raised temperature, optionally between 60-80°C.

22. A process as claimed in any one of the preceding claims wherein the granular material provided by step (e) comprises granules in the range 3mm-30mm in size.

23. A process as claimed in any one of the preceding claims wherein the granular material formed by step (f) is reduced in size, optionally by grinding or milling.

24. A process as claimed in any one of the preceding claims wherein the granular material formed by the drying step (e) has a solids content in the range of approximately 45-90% solids.

25. A process as claimed in any one of the preceding claims wherein the calcining of the granular material reduces the moisture in the material wholly or substantially to zero.

26. A process as claimed in any one of the preceding claims wherein particulate material being formed by step (f) is partly or substantially porous.

27. A process as claimed in any one of the preceding claims wherein the granular material is calcined with agitation.

28. A process as claimed in claim 27 wherein the agitation is provided by a rotary apparatus.

29. A process as claimed in claim 28 wherein the rotary apparatus is a high temperature rotary furnace tube.

30. A process as claimed in any one of the preceding claims wherein the calcining temperature is greater than 1300°C.

31. A process as claimed in claim 30 wherein the calcining temperature is approximately 1320°C, or higher.

32. A particulate solid material obtainable by a process as defined in any one of claims 1 to 31 having a bulk density of less than 1,000kg/m³, preferably in the range 560kg/m³ to 800kg/m³, and in the form of an aggregate having a mean particle size in the range 3 to 15mm.

33. A particulate solid material as claimed in claim 32 being a lightweight aggregate for making cementitious, concrete or other building blocks.

## Patentansprüche

1. Ein Verfahren zum Zubereiten eines partikelförmigen festen Materials, das die folgenden Schritte beinhaltet:
(a) Erhalten eines festen Papierfaserabfallmaterials in Wasser;
(b) Bestimmen eines Verhältnisses der Porzellanerde zu Kreide in dem festen Papierfaserabfallmaterial in Wasser unter Verwendung von entweder:
(i) einer "Säureextraktions"-Methode, wobei das kleinste vorgegebene Verhältnis 0,2 ist; oder
(ii) eine "Asche-/Säureextraktions"-Methode, wobei das kleinste vorgegebene Verhältnis 0,13 ist; wobei beide Methoden in der Beschreibung definiert sind;
(c) wenn das Verhältnis Porzellanerde:Kreide geringer als das kleinste vorgegebene Verhältnis ist, Zugeben eines Konditioniermittels zu dem festen Papierfaserabfallmaterial, um das Verhältnis von Porzellanerde:Kreide über das kleinste vorgegebene Verhältnis zu erhöhen;
(d) Entwässern des festen Papierfaserabfallmaterials, um ein entwässertes Material mit einem Feststoffgehalt in dem Bereich von 22-55 % zu produzieren;
(e) Trocknen des entwässerten Materials in einer rotierenden Vorrichtung mit Rühren, um in einer inerten Atmosphäre ein granuläres Material zu produzieren; und
(f) Kalzinieren des granulären Materials bei einer Temperatur von ungefähr 1300 °C oder mehr, um ein partikelförmiges Material aus 100 % Feststoffen bereitzustellen.

2. Verfahren gemäß Anspruch 1, wobei das feste Papierfaserabfallmaterial ein ungefährliches Abfallmaterial ist, das aus dem Recycling von Papier- und Gewebeabfall entsteht.

3. Verfahren gemäß Anspruch 2, wobei das feste Papierfaserabfallmaterial in der Form eines Schlamms vorliegt.

4. Verfahren gemäß einem der vorhergehenden Ansprüche, wobei das feste Papierfaserabfallmaterial einen Feuchtigkeitsgehalt von über 45 % aufweist.

5. Verfahren gemäß Anspruch 4, wobei das feste Papierfaserabfallmaterial einen Feuchtigkeitsgehalt von über 55 %, wahlweise 60 %, aufweist.

6. Verfahren gemäß einem der vorhergehenden Ansprüche, wobei Nebenbestandteile im festen Papierfaserabfallmaterial, einschließlich nichtfaserigen Störstoffmaterialien, vor Schritt (d) entfernt werden.

7. Verfahren gemäß einem der vorhergehenden Ansprüche, wobei das feste Papierfaserabfallmaterial Papierabfall aus einem Papierherstellungsverfahren ist.

8. Verfahren gemäß einem der vorhergehenden Ansprüche, wobei Porzellanerde jede beliebige Form von hydratisiertem Aluminiumsilicat einschließlich Kanditen und Kaolinen einschließt.

9. Verfahren gemäß einem der vorhergehenden Ansprüche, wobei die Kreide jede beliebige Form von Calciumcarbonat einschließt, was die Formen von Kalkstein einschließt.

10. Verfahren gemäß einem der vorhergehenden Ansprüche, wobei das Konditioniermaterial dem festen Papierfaserabfallmaterial in Schritt (b) zugegeben wird, selbst wenn das Verhältnis Porzellanerde:Kreide größer als das vorgegebene Minimum ist.

11. Verfahren gemäß einem der vorhergehenden Ansprüche, wobei das Konditioniermaterial teilweise, im Wesentlichen oder gänzlich Porzellanerde oder eine Suspension von Porzellanerde oder einem anderen Silicatmaterial ist.

12. Verfahren gemäß einem der vorhergehenden Ansprüche, wobei mit dem Konditioniermaterial ein Dispergiermittel zugegeben wird.

13. Verfahren gemäß einem der vorhergehenden Ansprüche, wobei das Material einen Feststoffgehalt von weniger als 45 %, wahlweise 22 % oder weniger aufweist.

14. Verfahren gemäß einem der vorhergehenden Ansprüche, wobei auch das Verhältnis von Siliciumdioxid und Aluminium zu natürlichen Füllstoffen in dem festen Papierfaserabfallmaterial bestimmt wird.

15. Verfahren gemäß einem der vorhergehenden Ansprüche, wobei der Trocknungsschritt (e) die Komprimierung und/oder Extrusion des Materials einschließt.

16. Verfahren gemäß Anspruch 15, wobei Schritt (e) durch eine Granulierpresse ausgeführt wird.

17. Verfahren gemäß einem der vorhergehenden Ansprüche, wobei der Trocknungsschritt (e) durch direkten Wärmekontakt bereitgestellt wird.

18. Verfahren gemäß Anspruch 17, wobei ein Wärmeübertragungsmaterial verwendet wird.

19. Verfahren gemäß einem der vorhergehenden Ansprüche, wobei die rotierende Vorrichtung geneigt ist.

20. Verfahren gemäß Anspruch 19, wobei die rotierende Vorrichtung eine gänzlich oder im Wesentlichen kontinuierliche Einspeisung von Material erlaubt.

21. Verfahren gemäß einem der vorhergehenden Ansprüche, wobei der Trocknungsschritt (e) bei einer erhöhten Temperatur, wahlweise zwischen 60-80 °C, ausgeführt wird.

22. Verfahren gemäß einem der vorhergehenden Ansprüche, wobei das durch Schritt (e) bereitgestellte granuläre Material Körnchen in dem Bereich von 3 mm bis 30 mm Größe beinhaltet.

23. Verfahren gemäß einem der vorhergehenden Ansprüche, wobei das durch Schritt (f) gebildete granuläre Material in seiner Größe, wahlweise durch Zerreiben oder Mahlen, reduziert wird.

24. Verfahren gemäß einem der vorhergehenden Ansprüche, wobei das durch den Trocknungsschritt (e) gebildete granuläre Material einen Feststoffgehalt in dem Bereich von ungefähr 45-90 % Feststoffe aufweist.

25. Verfahren gemäß einem der vorhergehenden Ansprüche, wobei das Kalzinieren des granulären Materials die Feuchtigkeit in dem Material gänzlich oder im Wesentlichen auf null reduziert.

26. Verfahren gemäß einem der vorhergehenden Ansprüche, wobei das durch Schritt (f) gebildete partikelförmige Material teilweise oder im Wesentlichen porös ist.

27. Verfahren gemäß einem der vorhergehenden Ansprüche, wobei das granuläre Material mit Rühren kalziniert wird.

28. Verfahren gemäß Anspruch 27, wobei das Rühren von einer rotierenden Vorrichtung bereitgestellt wird.

29. Verfahren gemäß Anspruch 28, wobei die rotierende Vorrichtung ein Hochtemperatur-Drehröhrenofen ist.

30. Verfahren gemäß einem der vorhergehenden Ansprüche, wobei die Kalziniertemperatur größer als 1300 °C ist.

31. Verfahren gemäß Anspruch 30, wobei die Kalziniertemperatur ungefähr 1320 °C oder mehr ist.

32. Ein partikelförmiges festes Material, das durch ein wie in einem der Ansprüche 1 bis 31 definiertes Verfahren erhalten werden kann, mit einer Schüttdichte von weniger als 1000 kg/m³, vorzugsweise in dem Bereich von 560 kg/m³ bis 800 kg/m³, und in der Form eines Aggregats mit einer mittleren Partikelgröße in dem Bereich von 3 bis 15 mm.

33. Partikelförmiges festes Material gemäß Anspruch 32, das ein leichtes Aggregat zur Herstellung von zementartigen, Beton-oder anderen Bausteinen ist.

## Revendications

1. Un procédé destiné à préparer un matériau solide particulaire comprenant les étapes consistant à :
(a) obtenir un matériau solide de déchets de fibre de papier dans de l'eau ;
(b) déterminer des proportions relatives terre à porcelaine / craie dans le matériau solide de déchets de fibre de papier dans l'eau en utilisant soit :
(i) une méthode « d'extraction à l'acide » où les proportions relatives prédéterminées minimum sont de 0,2 ; soit
(ii) une méthode « d'extraction à l'acide / par les cendres » où les proportions relatives prédéterminées minimum sont de 0,13 ; les méthodes étant toutes deux définies dans la description ;
(c) lorsque les proportions relatives terre à porcelaine / craie sont inférieures aux proportions relatives prédéterminées minimum, ajouter un agent de conditionnement au matériau solide de déchets de fibre de papier pour élever les proportions relatives terre à porcelaine / craie au-dessus des proportions relatives prédéterminées minimum ;
(d) égoutter le matériau solide de déchets de fibre de papier pour produire un matériau égoutté avec une teneur en solides comprise dans la gamme allant de 22 à 55 % ;
(e) sécher le matériau égoutté dans un appareil rotatif avec agitation pour produire un matériau granulaire dans une atmosphère inerte ; et
(f) calciner le matériau granulaire à une température d'approximativement 1 300 °C ou plus pour fournir un matériau particulaire à 100 % de solides.

2. Un procédé tel que revendiqué dans la revendication 1 dans lequel le matériau solide de déchets de fibre de papier est un matériau de déchets non dangereux provenant du recyclage de déchets de papier et de mouchoir en papier.

3. Un procédé tel que revendiqué dans la revendication 2 dans lequel le matériau solide de déchets de fibre de papier est sous forme de boue.

4. Un procédé tel que revendiqué dans n'importe laquelle des revendications précédentes dans lequel le matériau solide de déchets de fibre de papier a une teneur en humidité de plus de 45%.

5. Un procédé tel que revendiqué dans la revendication 4 dans lequel le matériau solide de déchets de fibre de papier a une teneur en humidité de plus de 55 %, de façon facultative 60 %.

6. Un procédé tel que revendiqué dans n'importe laquelle des revendications précédentes dans lequel des composants mineurs dans le matériau solide de déchets de fibre de papier incluant des matériaux d'impuretés non fibreux sont retirés préalablement à l'étape (d).

7. Un procédé tel que revendiqué dans n'importe laquelle des revendications précédentes dans lequel le matériau solide de déchets de fibre de papier est un déchet de papier provenant d'un procédé de fabrication de papier.

8. Un procédé tel que revendiqué dans n'importe laquelle des revendications précédentes dans lequel la terre à porcelaine inclut toute forme de silicate d'aluminium hydraté, incluant des kandites et des kaolins.

9. Un procédé tel que revendiqué dans n'importe laquelle des revendications précédentes dans lequel la craie inclut toute forme de carbonate de calcium, ce qui inclut les formes de pierre à chaux.

10. Un procédé tel que revendiqué dans n'importe laquelle des revendications précédentes dans lequel le matériau de conditionnement est ajouté au matériau solide de déchets de fibre de papier à l'étape (b) même lorsque les proportions relatives terre à porcelaine / craie sont supérieures au minimum prédéterminé.

11. Un procédé tel que revendiqué dans n'importe laquelle des revendications précédentes dans lequel le matériau de conditionnement est partiellement, substantiellement ou , entièrement de la terre à porcelaine, ou une suspension de terre à porcelaine, ou un autre matériau de silicate.

12. Un procédé tel que revendiqué dans n'importe laquelle des revendications précédentes dans lequel un agent dispersant est ajouté avec le matériau de conditionnement.

13. Un procédé tel que revendiqué dans n'importe laquelle des revendications précédentes dans lequel le matériau a une teneur en solides inférieure à 45 %, de façon facultative 22 % ou moins.

14. Un procédé tel que revendiqué dans n'importe laquelle des revendications précédentes dans lequel les proportions relatives silice et aluminium / charges naturelles dans le matériau solide de déchets de fibre de papier sont également déterminées.

15. Un procédé tel que revendiqué dans n'importe laquelle des revendications précédentes dans lequel l'étape consistant à sécher (e) inclut la compression et / ou l'extrusion du matériau.

16. Un procédé tel que revendiqué dans la revendication 15 dans lequel l'étape (e) est effectuée par une presse à granuler.

17. Un procédé tel que revendiqué dans n'importe laquelle des revendications précédentes dans lequel l'étape consistant à sécher (e) est fournie par contact thermique direct.

18. Un procédé tel que revendiqué dans la revendication 17 dans lequel un matériau de transfert thermique est utilisé.

19. Un procédé tel que revendiqué dans n'importe laquelle des revendications précédentes dans lequel l'appareil rotatif est incliné.

20. Un procédé tel que revendiqué dans la revendication 19 dans lequel l'appareil rotatif permet une alimentation entièrement ou substantiellement continue en matériau.

21. Un procédé tel que revendiqué dans n'importe laquelle des revendications précédentes dans lequel l'étape consistant à sécher (e) est effectuée à une température élevée, de façon facultative entre 60 et 80 °C.

22. Un procédé tel que revendiqué dans n'importe laquelle des revendications précédentes dans lequel le matériau granulaire fourni par l'étape (e) comprend des granules de taille comprise dans la gamme allant de 3 mm à 30 mm.

23. Un procédé tel que revendiqué dans n'importe laquelle des revendications précédentes dans lequel le matériau granulaire formé par l'étape (f) est réduit en taille, de façon facultative par concassage ou broyage.

24. Un procédé tel que revendiqué dans n'importe laquelle des revendications précédentes dans lequel le matériau granulaire formé par l'étape consistant à sécher (e) a une teneur en solides comprise dans la gamme allant approximativement de 45 à 90 % de solides.

25. Un procédé tel que revendiqué dans n'importe laquelle des revendications précédentes dans lequel la calcination du matériau granulaire réduit l'humidité dans le matériau entièrement ou substantiellement à zéro.

26. Un procédé tel que revendiqué dans n'importe laquelle des revendications précédentes dans lequel le matériau particulaire qui est formé par l'étape (f) est partiellement ou substantiellement poreux.

27. Un procédé tel que revendiqué dans n'importe laquelle des revendications précédentes dans lequel le matériau granulaire est calciné avec agitation.

28. Un procédé tel que revendiqué dans la revendication 27 dans lequel l'agitation est fournie par un appareil rotatif.

29. Un procédé tel que revendiqué dans la revendication 28 dans lequel l'appareil rotatif est un tube-foyer rotatif haute température.

30. Un procédé tel que revendiqué dans n'importe laquelle des revendications précédentes dans lequel la température de calcination est supérieure à 1 300 °C.

31. Un procédé tel que revendiqué dans la revendication 30 dans lequel la température de calcination est approximativement de 1 320 °C, ou plus.

32. Un matériau solide particulaire pouvant être obtenu par un procédé tel que défini dans n'importe laquelle des revendications 1 à 31 ayant un poids volumétrique de moins de 1 000 kg / m³, de préférence compris dans la gamme allant de 560 kg / m³ à 800 kg / m³, et sous la forme d'un agrégat ayant une taille de particule moyenne comprise dans la gamme allant de 3 à 15 mm.

33. Un matériau solide particulaire tel que revendiqué dans la revendication 32 qui est un agrégat léger destiné à réaliser des blocs de construction cimentaires, de béton ou autres.
